# EUROPÄISCHE PATENTSCHRIFT

(11) **EP 1 524 217 B1**
(45) Veröffentlichungstag und Bekanntmachung des Hinweises auf die Patenterteilung: **21.06.2006**
(21) Anmeldenummer: 05100199.8
(22) Anmeldetag: 26.03.2002
(51) Int. Cl.: B65H 19/10

(54) **Verfahren zur Verbindung eines Bahnanfanges**
Device for joining the leading edge of a web
Méthode pour le raccordement d'une bande

(30) Priorität: 12.04.2001 DE 10118362
(43) Veröffentlichungstag der Anmeldung: 20.04.2005
(62) Teilanmeldung aus: 02729820.7
(73) Patentinhaber: Koenig & Bauer Aktiengesellschaft, 97080 Würzburg (DE)
(72) Erfinder: Beck, Peter, 97753 Karlstadt (DE); Rösch, Andreas, 97753 Karlstadt (DE)
(74) Vertreter: Stiel, Jürgen

(56) Entgegenhaltungen:
- EP-A- 0 566 880
- EP-A- 0 970 904
- EP-A- 0 970 905
- EP-A- 1 022 245

## Beschreibung

Die Erfindung betrifft ein Verfahren zur Verbindung eines Bahnanfanges gemäß dem Oberbegriff des Anspruchs 1.

Die EP 1 022 245 A2 offenbart Klebemittel für fliegenden Rollenwechsel, wobei eine Klebestelle eine Solltrennstelle aufweist.

Die DE 198 30 674 A1 offenbart Klebemittel für fliegenden Rollenwechsel, wobei zwei Randbereiche einer Klebestelle jeweils eine Solltrennstelle aufweisen.

Aus der WO 98/52857 A1 ist eine Methode zur Klebestellenvorbereitung einer Materialbahn bekannt. Weiter sind aus dieser Druckschrift verschiedene Vorrichtungen zur Durchführung dieses Verfahrens bekannt. Bei diesem Verfahren wird der Bahnanfang der neuen Papierbahn erfasst und in Papierleiteinrichtungen so geführt, dass auf der Außenseite über die Schnittkante des Bahnanfangs überstehend Klebemittel, beispielsweise Klebeetiketten, angebracht werden können. Anschließend wird die Papierbahn zurück auf die Papierrolle aufgespult, so dass die am Bahnanfang über die Schnittkante überstehenden Klebemittel am Umfang der Papierrolle zur Anlage kommen und auf diese Weise den Bahnanfang auf den Umfang fixieren. Im Ergebnis überdecken bei diesem Verfahren zur Klebestellenvorbereitung einer Papierrolle also die Klebemittel die Schnittkante des Bahnanfanges.

Die DE 43 39 309 A1, die DE 296 21 879 U1 und die DE 198 30 673 A1, die als nächster Stand der Technik anzusehen ist, beschreiben Klebemittel zur Vorbereitung einer Materialrolle für fliegenden Rollenwechsel, wobei ein Trägerband mittels einer Klebezone mit der Oberseite des Bahnanfangs und eine andere Klebezone mit der zweiten Materiallage der Rolle und die Außenseite des Trägerbands mit der ablaufenden Bahn verbunden wird.

Bei den Klebestreifen der DE 40 33 900 A1 erfolgt die Trennung der Klebestreifen zwischen einer Klebezone eines Trägerbandes und eines Klebestreifens. Eine Aufspaltung zwischen der auf der zweiten Lage angeordneten Klebestelle zwischen zwei Klebestreifen ist nicht vorgesehen.

Die nachveröffentlichte WO 03/024850 A1 offenbart ein Klebeband für den fliegenden Rollenwechsel von auf Rollen aufgewickeltem Flachbahnmaterial, ausgerüstet mit einem Hauptträger, einer Selbstklebemasse auf der Vorderseite und zumindest einem selbstklebenden spaltbaren System auf der Rückseite, wobei auf der Rückseite zumindest ein nichtspaltendes selbstklebendes System vorgesehen ist.

Der Erfindung liegt die Aufgabe zugrunde, ein Verfahren zur Verbindung eines Bahnanfanges zu schaffen.

Diese Aufgabe wird erfindungsgemäß durch die Merkmale des Anspruchs 1 gelöst.

Ein mit der Erfindung erzielbarer Vorteil besteht insbesondere darin, dass das Klebemittel zur Fixierung des Bahnanfangs auf dem Umfang der neuen Materialrolle die Schnittkante von oben überdeckt, und somit einfach aufzubringen ist.

Durch die Trennung zweier Klebestreifen in Ihrer Verbindungszone wird eine definierte Solltrennstelle geschaffen, ohne Teile zerschneiden oder zerreißen zu müssen. Beim Abziehen des Bahnanfangs vom Umfang der neuen Materialrolle während des Anklebens an die ablaufende Materialbahn müssen deshalb die Klebemittel zur Fixierung des Bahnanfanges nicht durchtrennt werden, wozu beispielsweise eine Perforation in den Klebemitteln vorgesehen werden muss. Vielmehr kann der Bahnanfang vom Umfang der neuen Materialrolle einfach abgezogen werden, wobei die Abziehkräfte zumindest so groß gewählt werden müssen, um die Haltekraft des Klebemittels zwischen dem Umfang der neuen Materialrolle und dem Bahnanfang zu überwinden. Besonders vorteilhaft ist dieses Verfahren, wenn ein Klebemittel, beispielsweise ein Klebeband verwendet wird, das längs seiner Körperebene aufgespaltet werden kann. Beim Abziehen des Bahnanfangs wird dann das Klebemittel in der Teilungsebene aufgespaltet, so dass ein Teil mit dem Bahnanfang eingezogen wird und der andere Teil am Bahnumfang verbleibt. Es sind keine einzelnen Etikette notwendig, so dass eine durchgehende Klebung möglich ist.

Ausführungsbeispiele der Erfindung sind in den Zeichnungen dargestellt und werden im folgenden näher beschrieben.

Es zeigen:
- Fig. 1: ein zur Klebestellenvorbereitung einer Materialrolle geeignetes Klebemittel im Querschnitt;
- Fig. 2: eine Bearbeitungsphase während der Klebestellenvorbereitung in schematisch dargestellter seitlicher Ansicht.

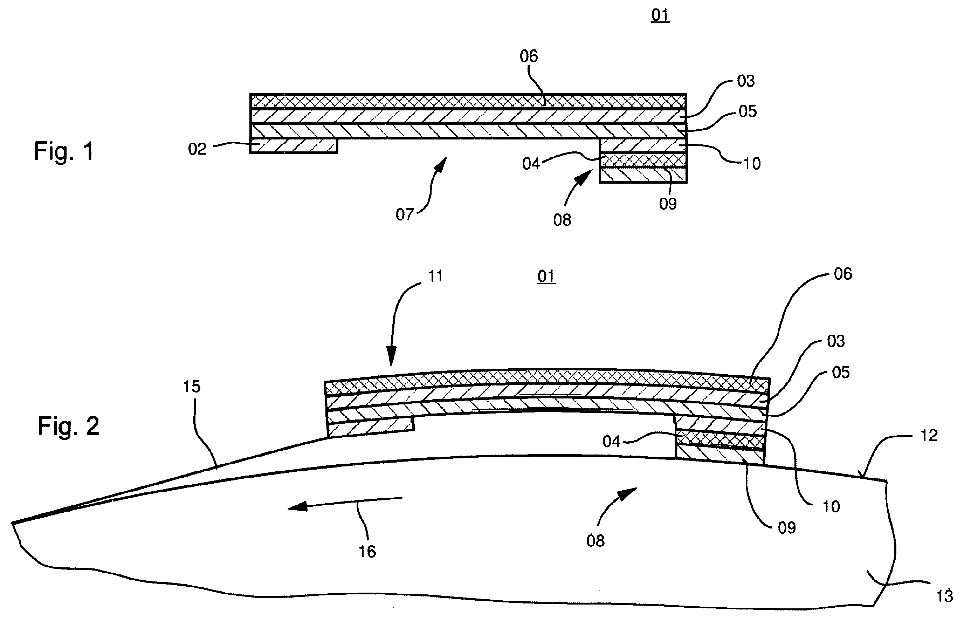

Zur Durchführung des Verfahrens kann ein in der Art eines Klebebandes ausgebildetes Klebemittel 01 verwendet werden, wie es in Fig. 1 schematisch im Querschnitt dargestellt ist.

Das Klebemittel 01 weist ein Trägerband 05 auf, das dem Klebemittel 01 mechanische Festigkeit verleiht und in dem Zugkräfte übertragen werden können.

Auf der Oberseite des Trägerbandes 05 ist ein Klebestreifen 03 vorgesehen, der durch Aufbringung eines entsprechenden Klebestoffes auf dem Trägerband 05 gebildet wird und durch einen Abdeckstreifen 06 geschützt ist.

Auf der Unterseite des Trägerbandes 05 befindet sich ebenfalls ein Klebestreifen 02 sowie eine weitere Klebezone 08. Diese Klebezone 08 weist mindestens zwei Klebestreifen 09, 10 auf, die durch ein Spaltpapier 04 voneinander getrennt sind. Der Klebestreifen 02 ist einlagig und ohne Spaltpapier 04 ausgebildet.

Die beiden auf der Unterseite des Trägerbandes 05 befindlichen Klebestellen 02; 08 können durch einen Spalt 07 voneinander getrennt sein.

Denkbar ist auch, auf der Unterseite des Trägerbandes mehrere einlagige Klebestellen 02 aufzubringen, die durch mehrer Spalte 07 voneinander getrennt sind.

Die Verwendung des Klebemittels 01 bei Durchführung der Verfahren sind schematisch in Fig. 2 dargestellt.

Wie man in Fig. 2 erkennt, wird das Klebemittel 01 auf dem Bahnanfang 11 und dem Umfang 12, d. h. einer zweiten Materiallage 12, manuell oder durch Einsatz geeigneter mechanischer Greifelemente der neuen Materialrolle 13, z. B. Papierrolle 13, aufgebracht.

Dazu wird z. B. der Bahnanfang 11 auf einen Bearbeitungstisch flächig ausgelegt und der Bahnanfang 11 wird unter Bildung einer exakten Schnittkante parallel oder geneigt zur Rotationsachse der Materialrolle 13 geschnitten. Dazu wird das Klebemittel 01 durch kongruentes Auflegen des ersten Klebestreifens 02 entlang der Schnittkante am Bahnanfang 11 fixiert. Der zweite Klebestreifen 03 ist in dieser Bearbeitungsphase noch mit seinem Abdeckstreifen 06 abgedeckt.

Nach der Fixierung des Klebemittels 01 am Bahnanfang 11 der Materialbahn 15, z. B. einer Papierbahn 15, wird die Materialrolle 13 in Richtung des Bewegungspfeils 16 zurückgespult.

Dabei wird der Bahnanfang 11 bzw. das Klebemittel 01 von einem in der Art einer Papierleitwalze ausgebildeten Andrückelement (nicht dargestellt) gegen den Umfang 12 der Materialrolle 13 gedrückt. Das Klebemittel 01 gelangt mit der Klebezone 08 in den Bereich des Umfangs 12 der neuen Materialrolle 13, so dass durch den Kontakt der Klebezone 08 mit dem Umfang 12 der Bahnanfang 11 am Umfang 12 fixiert wird. Anschließend wird der Abdeckstreifen 06 vom Klebeband 03 entfernt. Damit ist die Klebestelle an der neuen Materialrolle 13 fertig vorbereitet.

Nach Aufspannung der neuen Materialrolle 13 in einem nicht dargestellten Rollenwechsler wird durch Andrücken des Klebestreifens 03 gegen eine andere Materialbahn der Bahnanfang 11 mit der zu ersetzenden Materialbahn verbunden.

Beim anschließenden Abziehen des Bahnanfanges 11 vom Umfang der neuen Materialrolle 13 wird die Klebezone 08 entlang eines Spaltpapiers 04 zwischen den Klebestreifen 09 und 10 aufgespalten, so dass nach der Fixierung der Klebezone 08 an der Materialbahn 12 das Klebemittel 01 durch Aufspaltung zwischen den Klebemitteln 9 und 10 aufgetrennt wird.

### Bezugszeichenliste

- 01: Klebemittel
- 02: Klebestreifen, erster
- 03: Klebestreifen, zweiter
- 04: Spaltpapier
- 05: Trägerband
- 06: Abdeckstreifen (03)
- 07: Spalt
- 08: Klebezone, Klebemittel
- 09: Klebestreifen
- 10: Klebestreifen
- 11: Bahnanfang (15)
- 12: Umfang, Materiallage, zweite (13)
- 13: Materialrolle, Papierrolle
- 14: -
- 15: Materialbahn, Papierbahn
- 16: Bewegungspfeil

## Patentansprüche

1. Verfahren zur Verbindung eines Bahnanfanges (11) einer ersten Materialbahn (15) einer Materialrolle (13) mit einer anderen Materialbahn einer anderen Materialrolle mittels eines Klebemittels (01), wobei das Klebemittel (01) ein Trägerband (05) aufweist, auf dessen Oberseite mindestens ein Klebestreifen (03) angeordnet ist und auf dessen Unterseite mindestens eine weitere Klebezone (08) ausgebildet ist, wobei die Klebezone (08) mit der zweiten Materiallage (12) der Materialrolle (13) verbunden wird, und wobei das Trägerband (05) mittels eines anderen Klebestreifens (02) auf der Oberseite des Bahnanfanges (11) der ersten Materialbahn (15) verbunden wird, **dadurch gekennzeichnet, dass** die Klebezone (08) mindestens zwei Klebestreifen (09, 10) aufweist, die durch ein Spaltpapier (04) voneinander getrennt sind und der Klebestreifen (02) und die Klebezone (08) durch einen Spalt (07) voneinander getrennt sind, dass zum Fixieren des Bahnanfanges (11) das Klebemittel (01) mittels eines Andrückelementes gegen den Umfang (12) der Materialrolle (13) gedrückt wird.

2. Verfahren nach Anspruch 1, **dadurch gekennzeichnet, dass** vor Aufbringen des Klebemittels (01) auf den Bahnanfang (11) der ersten Materialbahn (15) dieser Bahnanfang (11) geschnitten wird.

3. Verfahren nach Anspruch 2, **dadurch gekennzeichnet, dass** der Bahnanfang (11) unter Bildung einer exakten Schnittkante parallel oder geneigt zur Rotationsachse der Materialrolle (13) geschnitten wird.

4. Verfahren nach Anspruch 1, **dadurch gekennzeichnet, dass** zuerst das Klebemittel (01) am Bahnanfang (11) der Materialbahn (15) der Materialrolle (13) fixiert wird und anschließend das Klebemittel (01) mit der zweiten Materiallage (12) dieser Materialrolle (13) fixiert wird.

5. Verfahren nach Anspruch 1, **dadurch gekennzeichnet, dass** der Bahnanfang (11) zum Fixieren des Klebemittels (01) am Bahnanfang (11) flächig ausgelegt wird.

6. Verfahren nach Anspruch 5, **dadurch gekennzeichnet, dass** der Bahnanfang (11) auf einem Bearbeitungstisch ausgelegt wird.

7. Verfahren nach Anspruch 5, **dadurch gekennzeichnet, dass** nach Fixierung des Klebemittels (01) der Bahnanfang (11) auf die Materialrolle (13) zurückgespult wird.

## Claims

1. A method of joining a leading edge (11) of a first web (15) of material of a roll (13) of material to another web of material of another roll of material by means of an adhesive means (01), wherein the adhesive means (01) has a support band (05), on the top side of which at least one adhesive strip (03) is provided and on the underside of which at least one further adhesion zone (08) is formed, wherein the adhesion zone (08) is joined to the second layer (12) of material of the roll (13) of material, and wherein the support band (05) is joined by means of another adhesive strip (02) to the top side of the leading edge (11) of the first web (15) of material, **characterized in that** the adhesion zone (08) has at least two adhesive strips (09, 10) which are separated from each other by a backing paper (04), and the adhesive strip (02) and the adhesion zone (08) are separated from each other by a gap (07), and in order to fix the leading edge (11) of the web the adhesive means (01) is pressed against the periphery (12) of the roll (13) of material by means of a pressing element.

2. A method according to Claim 1, **characterized in that** before the adhesive means (01) is applied to the leading edge (11) of the first web (15) of material the said leading edge (11) of the web is cut.

3. A method according to Claim 2, **characterized in that** the leading edge (11) of the web is cut so as to form a precise cutting edge parallel to or obliquely to the axis of rotation of the roll (13) of material.

4. A method according to Claim 1, **characterized in that** first the adhesive means (01) is fixed to the leading edge (11) of the web (15) of the roll (13) of material and then the adhesive means (01) is fixed to the second layer (12) of the said roll (13) of material.

5. A method according to Claim 1, **characterized in that** the leading edge (11) of the web is laid out so as to fix the adhesive means (01) to the leading edge (11) of the web in a flat manner.

6. A method according to Claim 5, **characterized in that** the leading edge (11) of the web is laid out on an operating bench.

7. A method according to Claim 5, **characterized in that** after the adhesive means (01) is fixed the leading edge (11) of the web is wound back onto the roll (13) of material.

## Revendications

1. Procédé de liaison d'une amorce de bande (11) d'une première bande de matériau (15) d'un rouleau de matériau (13) à une autre bande de matériau d'un autre rouleau de matériau, à l'aide d'un moyen adhésif (01), le moyen adhésif (01) présentant une bande support (05), en face supérieure de laquelle est disposée au moins une bande d'adhésif (03) et en face inférieure de laquelle est réalisée au moins une autre zone de collage (08), la zone de collage (08) étant reliée à la deuxième couche de matériau (12) du rouleau de matériau (13), et la bande support (05) étant reliée, au moyen d'une autre bande d'adhésif (02), en face supérieure de l'amorce de bande (11) de la première bande de matériau (15), **caractérisé en ce que** la zone de collage (08) présente au moins deux bandes d'adhésif (09, 10), séparées l'une de l'autre par un papier de séparation (04) et la bande d'adhésif (02) et la zone de collage (08) étant séparées l'une de l'autre par un intervalle (07), **en ce que**, pour fixer l'amorce de bande (11), le moyen adhésif (01) est pressé, au moyen d'un élément de pressage, contre la périphérie (12) du rouleau de matériau (13).

2. Procédé selon la revendication 1, **caractérisé en ce que**, avant application du moyen adhésif (01) sur l'amorce de bande (11) de la première bande de matériau (15), cette amorce de bande (11) est coupée.

3. Procédé selon la revendication 2, **caractérisé en ce que** l'amorce de bande (11) est coupée, en formant un bord de coupe exact, parallèlement ou de façon inclinée par rapport à l'axe de rotation du rouleau de matériau (13).

4. Procédé selon la revendication 1, **caractérisé en ce que**, d'abord, le moyen adhésif (01) est fixé sur l'amorce de bande (11) de la bande de matériau (15) du rouleau de matériau (13) et, ensuite, le moyen adhésif (01) est fixé à la deuxième couche de matériau (12) de ce rouleau de matériau (13).

5. Procédé selon la revendication 1, **caractérisé en ce que** l'amorce de bande (11) est déployée à plat, pour fixer le moyen adhésif (01) sur l'amorce de bande (11).

6. Procédé selon la revendication 5, **caractérisé en ce que** l'amorce de bande (11) est déployée sur une table de travail.

7. Procédé selon la revendication 5, **caractérisé en ce que**, après fixation du moyen adhésif (01), l'amorce de bande (11) est rebobinée en sens inverse, sur la bande de matériau (13).
